# EUROPÄISCHE PATENTSCHRIFT

(11) **EP 2 663 981 B1**
(45) Veröffentlichungstag und Bekanntmachung des Hinweises auf die Patenterteilung: **09.12.2015**
(21) Anmeldenummer: 12703682.0
(22) Anmeldetag: 10.01.2012
(51) Int. Cl.: G21C 7/12, G21C 13/036, F16B 7/20

(54) **Sicherungsvorrichtung für einen Steuerstab in einer kerntechnischen Anlage**
Securing device for a control rod in a nuclear plant
Dispositif de sécurité pour barre de commande dans une installation nucléaire

(30) Priorität: 11.01.2011 DE 102011008202
(43) Veröffentlichungstag der Anmeldung: 20.11.2013
(73) Patentinhaber: AREVA GmbH, 91052 Erlangen (DE)
(72) Erfinder: WINTERMANN, Benediktus, 911054 Duckenhof (DE); GERSTENHÖFER, Alfred, 90425 Nürnberg (DE); KÖHLER, Patrick, 90491 Nürnberg (DE)
(74) Vertreter: Kugler, Jörg
(86) Internationale Anmeldenummer: PCT/EP2012/000074
(87) Internationale Veröffentlichungsnummer: WO 2012/095295

(56) Entgegenhaltungen:
- DE-A1- 3 117 520
- DE-A1- 3 342 838
- US-A- 5 787 136
- US-A1- 2007 030 941
- US-B1- 6 418 178

## Beschreibung

Die Erfindung betrifft eine Sicherungsvorrichtung für einen Steuerstab in einer kerntechnischen Anlage.

In einer kerntechnischen Anlage, beispielsweise in einem Kernkraftwerk, werden linear verfahrbare Steuerstäbe verwendet, um Kettenreaktionen von Kernzerfallsprozessen in einem Reaktor, bei denen Teilchenstrahlung - insbesondere Neutronenstrahlung - emittiert wird, durch Absorption der Strahlung zu kontrollieren. Je weiter solche Steuerstäbe, die typischerweise in Gruppen gebündelt angeordnet sind, zwischen die nuklearen Brennelemente geschoben werden, desto größere Anteile der die Kettenreaktion weiter antreibenden Teilchenstrahlung werden absorbiert, so dass die Kettenreaktion entsprechend langsamer abläuft und bei voller Einfahrposition der Steuerstäbe entsprechend zum Erliegen gebracht wird. Zustand und Ablauf der Kettenreaktion sind somit von der jeweiligen Position der linear verfahrbaren Steuerstäbe abhängig und durch diese bestimmt. Eine mechanische Sicherung der Steuerstäbe in der gewünschten Position ist somit für eine zuverlässige Einstellung des Betriebszustandes relevant. Insbesondere muss die Lagesicherung in der für die Abschaltung des Reaktors notwendigen Steuerstabendposition aus sicherheitstechnischer Sicht gewährleistet sein.

Bei Siedewasserreaktoren treten hohe Temperaturen und Drücke im Reaktorkreislauf auf, so dass bei einem möglichen Versagen der druckführenden Umschließung des mechanisch / hydraulisch betätigten Steuerstabantriebes die Steuerstäbe gegen ein unkontrolliertes Ausfahren ("Ausschießen") gesichert werden müssen. Bei einem unkontrollierten Ausfahren der Steuerstäbe besteht das Risiko einer unzulässigen Reaktor-Leistungszunahme, was im Extremfall - bei einem simultanen Versagen sämtlicher weiterer Sicherungsvorrichtungen - zu einer Kernschmelze führen könnte. Zur Sicherung der Steuerstäbe gegen ein unkontrolliertes Ausfahren sind bei Siedewasserreaktoren üblicherweise Sicherungsvorrichtungen installiert, bei welchen das Antriebsgehäuse des Steuerstabantriebes beispielsweise mittels Zugankern an einer externen, den Reaktordruckbehälter in einem gewissen Abstand umgebenden Abschirmplatte gehalten wird.

Genauer gesagt umfasst die dort eingesetzte Sicherungsvorrichtung als zu sichernde Baueinheit einen Steuerstabantrieb mit einem den Steuerstabantrieb umschließenden, zylindrisch geformten Antriebsgehäuse, welches aus einem Reaktor durch die Reaktordruckwand herausgeführt ist. Weiterhin umfasst die Sicherungsvorrichtung eine lokal parallel zu der Reaktordruckwand auf der Außenseite des Reaktors angeordnete Abschirmplatte, durch welche das Antriebsgehäuse geführt ist, sowie ein Widerlager, welches mittels eines zylindrischen Bundes mit dem Antriebsgehäuse verbunden ist und durch eine Mehrzahl von Zugankern an der Abschirmplatte festgehalten ist.

Nachteiligerweise sind die für eine derartige Sicherungsvorrichtung erforderlichen Bauteile, insbesondere Zuganker und Widerlager, kostenintensiv und erschweren die Zugänglichkeit bei Montagen. Zusätzlich können bei bestimmten Temperaturverhältnissen zwischen dem Reaktordruckbehälter inklusive der Steuerstabantriebe und der Druckbehälterabstützung hohe Kräfte auf die Abschirmplatte auftreten, die durch unterschiedlich starke thermische Ausdehnungen der Bauteile bedingt sind. Im Falle des Bruchs des Antriebsgehäuses muss die Abschirmplatte die über die Zuganker eingeleiteten Massen- und Verzögerungskräfte aufnehmen. Letzterem Problem ist üblicherweise dadurch begegnet, dass die Zuganker und die Abschirmplatte für besonders hohe mechanische und thermische Belastungen ausgebildet und verstärkt sind, und dass zusätzliche Verformungskörper zur Pufferung mechanischer Belastungen installiert sind.

In einer alternativen Sicherungsvorrichtung ist das Antriebsgehäuserohr mit den Einbauten des Reaktordruckbehälters direkt verbunden und durch diese stabil festgehalten. Bei der Einrichtung werden jedoch nicht alle möglichen Bruchlagen des Antriebgehäuses abgedeckt.

Eine Sicherungsvorrichtung für einen Steuerstab mit den Merkmalen des Oberbegriffs von Anspruch 1 ist beispielsweise aus dem Dokument DE 33 42 838 A1 bekannt. Eine ähnliche Vorrichtung ist aus dem Dokument US 6 418 178 B1 bekannt. Dieses Dokument offenbart auch eine Bajonettverbindung, jedoch nur für die Kopplung Antrieb - Steuerstab.

Eine Aufgabe der Erfindung ist es, eine Vorrichtung anzugeben, mit der ein unkontrolliertes Ausfahren des jeweiligen Steuerstabes möglichst zuverlässig verhindert werden kann, welche zugleich möglichst kostengünstig ist, und welche insbesondere für Montagearbeiten ein möglichst geringfügiges Hindernis darstellt.

Die genannte Aufgabe wird erfindungsgemäß durch die Merkmale des Anspruchs 1 gelöst. Danach wird eine Sicherungsvorrichtung für einen Steuerstab / Steuerstabantrieb in einer kerntechnischen Anlage vorgeschlagen, die einen Steuerstabantrieb und ein den Steuerstabantrieb einfassendes und zur Durchführung durch eine Reaktordruckwand ausgebildetes Antriebsgehäuse aufweist, wobei das Antriebsgehäuse zumindest ein Kupplungselement zur Ausbildung einer - vorzugsweise lösbaren - kraftschlüssigen und/oder formschlüssigen Verbindung des Antriebsgehäuses mit der Reaktordruckwand aufweist. Dabei weist das Antriebsgehäuse eine im Wesentlichen hohlzylindrische Form auf, und das oder jedes Kupplungselement ist in Form einer Bajonettverbindung ausgebildet.

Die Erfindung geht von der Überlegung aus, das Antriebsgehäuse des Steuerstabantriebes unmittelbar an der Reaktordruckwand zu sichern, statt das Antriebsgehäuse - wie in bekannten Lösungen - nur durch die Reaktordruckwand aus dem Inneren des Reaktors hinauszuführen und die Sicherung an einer separaten Abschirmplatte mit mechanischen Bauteilen, insbesondere mit Widerlagern und Zugankern, zu realisieren. Da das Antriebsgehäuse in jedem Falle durch die Reaktordruckwand hindurchgeführt werden muss, wofür eine Aussparung in der Reaktordruckwand erforderlich ist, ist es vorteilhaft, das Hindurchführen mit einer Haltefunktion im Bereich der Aussparung zu kombinieren. Mit Hilfe einer Anzahl von mechanischen Kupplungselementen, welche zu einem formschlüssigen Ineinandergreifen in jeweils korrespondierende Ausformung in der Reaktordruckwand im Bereich der Aussparung ausgebildet sind, bzw. welche zur Bildung eines Kraft- und/oder Formschlusses mit korrespondierenden Bereichen in der Reaktordruckwand im Bereich der Aussparung ausgebildet sind, kann eine stabile Haltefunktion auch bei hohen mechanischen Belastungen erreicht werden. Da derartige Kupplungselemente zudem im Wesentlichen monomorph realisierbar sind, verhalten sie sich auch in Bezug auf thermisch bedingte Ausdehnungen stetig und kalkulierbar, so dass bei geeigneter Material- und Formwahl der Kupplungselemente der Einflussfaktor der thermischen Belastbarkeit begrenzbar bleibt.

Mit Hilfe einer derartigen Anordnung entfällt die Notwendigkeit einer separaten und externen mechanischen Sicherung des Antriebsgehäuses mit einer Abschirmplatte und verbindenden mechanischen Bauteilen, welche insbesondere für thermische / mechanische Belastungen ausgebildet sein müssen, und welche insbesondere die Zugänglichkeit zu dem Antriebsgehäuse und dem Steuerstabantrieb erschweren, speziell bei Montagen.

Erfindungsgemäß weist das Antriebsgehäuse eine im Wesentlichen hohlzylindrische Form auf, und ist in definierten Höhenlagen jeweils zur Bildung einer Bajonettverbindung bzw. eines Bajonettverschlusses ausgestaltet. Eine Bajonettverbindung ist insbesondere geeignet für eine stabile konzentrische Verbindung von zwei Bauteilen, deren Formgebung bezüglich einer charakteristischen Längsachse im Wesentlichen der Geometrie von zwei konzentrischen Hohlzylindern entspricht, wobei ohne die Bajonettverbindung der minimale Innenradius des äußeren Hohlzylinders größer ist als der maximale Außenradius des inneren Hohlzylinders. Durch eine Bajonettverbindung sind der Außenradius des inneren Hohlzylinders und der Innenradius des äußeren Hohlzylinders lokal vergrößert, so dass im Verschlusszustand beide Hohlzylinder formschlüssig ineinandergreifen und nicht mehr bezüglich der Längsachse gegeneinander verschiebbar sind. Wie konstruktionsbedingt bei Bajonettverschlüssen üblich, erfolgt die Verbindung der zylindrischen Bauteile miteinander über eine Dreh-Steck-Bewegung.

Bei einer Ausbildung des oder jedes Kupplungselementes nach Art einer Bajonettverbindung entspricht dem äußeren Hohlzylinder die Reaktordruckwand mit der Aussparung, wobei die innere Zylinderfläche durch die die Aussparung definierende Randfläche der Reaktordruckwand gegeben ist. Dem inneren Hohlzylinder entspricht das Antriebsgehäuse.

Weitere zweckmäßige Ausführungsformen der erfindungsgemäßen Sicherungsvorrichtung beziehen sich auf die Verbindung des Steuerstabantriebes mit dem Antriebsgehäuse. Für eine komplette Sicherung eines Steuerstabes ist außer der Sicherung des Antriebsgehäuses bezüglich der Reaktordruckwand auch die Sicherung des Steuerstabantriebes bezüglich des Antriebsgehäuses relevant, da ein unkontrolliertes Ausfahren sich auch dann noch ereignen kann, wenn das Antriebsgehäuse selbst zwar gesichert ist, jedoch die Haltefunktion des Steuerstabantriebes bezüglich des Antriebsgehäuses versagt und sich der Steuerstab mit dem Steuerstabantrieb aus dem Antriebsgehäuse löst.

Zur Sicherung des Steuerstabantriebes in dem Antriebsgehäuse weist vorteilhafterweise der Steuerstabantrieb zumindest ein inneres Kupplungselement zur Ausbildung einer kraftschlüssigen und/oder einer formschlüssigen Verbindung des Steuerstabantriebes mit dem Antriebsgehäuse auf. Auch dieses Kupplungselement ist bevorzugt zur Ausbildung einer lösbaren Bajonettverbindung ausgestaltet.

Mit einer derartigen Anordnung entspricht die Sicherung des Steuerstabantriebes bezüglich des Antriebsgehäuses der Sicherung durch das oder jedes Kupplungselement zwischen dem Antriebsgehäuse und der Reaktordruckwand. Durch die einander entsprechenden Sicherungen kann ein energetischer Pufferungseffekt erzielt werden: Der bei einem Steuerstabauswurf aus dem Reaktor erzeugte mechanische Impuls wird zunächst unmittelbar von dem Steuerstab auf den Steuerstabantrieb übertragen, von dort mittels des oder jedes inneren Kupplungselementes auf das Antriebsgehäuse übertragen. Ein Teil der Energie, die von dem inelastischen Anteil des Stoßes herrührt, wird dabei absorbiert. In analoger Weise wird der mechanische Impuls des Antriebsgehäuses mittels des oder jedes Kupplungselementes auf die Reaktordruckwand übertragen, wobei die Restenergie des Stoßes noch weiter reduziert wird. Durch eine geeignete Formgebung und Materialwahl der Kupplungselemente kann der inelastische Stoßanteil im Vergleich zu dem elastischen Stoßanteil erhöht werden, indem beispielsweise auf den Kupplungselementen plastisch verformbare Bauteile in geeigneter Anordnung ausgebildet sind. Bei einem durch ein solches Kupplungselement vermittelten Impulsübertrag wird dann die Stoßenergie vermehrt zur Verformung der Bauteile absorbiert. Eine durch diesen Pufferungseffekt erreichte kaskadenartige Reduktion der Stoßenergie erhöht insgesamt die Zuverlässigkeit der Sicherungsvorrichtung im Vergleich zu einem System mit einem einfachen Impuls- und Energieübertrag, setzt jedoch voraus, dass jedes Kupplungselement stabil genug ist, um die Haltefunktion bei einem Impulsübertrag zu erfüllen. Eine Erhöhung der Redundanz der Sicherungsvorrichtung ist somit durch eine Erhöhung der Gesamtanzahl der Kupplungselemente erzielbar.

In einer geeigneten Weiterbildung der Sicherungsvorrichtung umfasst der Steuerstabantrieb ein hohlzylindrisch geformtes Bauteil, und ist das innere Kupplungselement oder eine Mehrzahl von Kupplungselementen in Form einer Bajonettverbindung ausgebildet.

In einer besonders geeigneten Ausführungsvariante der Sicherungsvorrichtung weist der Steuerstabantrieb eine Mehrzahl von inneren Kupplungselementen auf, wobei zumindest jeweils ein inneres Kupplungselement in jeweils einem endseitigen Bereich bezüglich der Längsrichtung des Steuerstabantriebes ausgebildet ist. Durch eine solche verteilte Anordnung der inneren Kupplungselemente ist eine Kraftübertragung zwischen dem Steuerstabantrieb und dem Antriebsgehäuse in entsprechender Weise verteilt und somit insgesamt verbessert. Je mehr innere Kupplungselemente ausgebildet sind, desto höher ist die erreichbare Stabilität der Verbindung.

Die inneren Kupplungselemente sind dabei bevorzugt derart ausgebildet und angeordnet, dass sie simultan durch einen gemeinsamen Bewegungsablauf (sprich Kupplungsvorgang) gelöst und verbunden werden. Mit anderen Worten: Die zuletzt genannte Ausführungsvariante der Sicherungsvorrichtung ist vorzugsweise dahingehend weitergebildet, dass die inneren Kupplungselemente zur Ausbildung einer kraftschlüssigen und/oder einer formschlüssigen Verbindung des Steuerstabantriebes mit dem Antriebsgehäuse mechanisch gekoppelt sind. Auf diese Weise können die inneren Kupplungselemente gemeinsam angesteuert werden zur Lösung und zur Bildung der Verbindung des Steuerstabantriebes mit dem Antriebsgehäuse. Dies ist insbesondere für eine schnelle Montage und für eine Durchführung von Instandhaltungsmaßnahmen von Vorteil.

In einer weiteren bevorzugten Ausführung der Sicherungsvorrichtung umfasst der Steuerstabantrieb ein separates Bauteil, und es ist ein Klemmelement zur Ausbildung einer kraft- und/oder formschlüssigen Verbindung des separaten Bauteils mit dem Antriebsgehäuse vorgesehen.

Die mit der Erfindung erzielten Vorteile bestehen insbesondere darin, dass durch die Sicherung des Steuerstabantriebsgehäuses durch interne Kupplungen direkt an der Reaktordruckbehälterwand die bislang nachteiligen Effekte unterschiedlicher Wärmeausdehnungen vermieden werden, die bislang kostenintensiven Bauteile entfallen, die Montagearbeiten wegen des größeren Freiraumes erleichtert werden, und die erforderliche Haltefunktion bei Versagen des Antriebsgehäuses dennoch zuverlässig erfüllt wird.

Nachfolgend wird ein Ausführungsbeispiel einer erfindungsgemäßen Sicherungsvorrichtung anhand von Zeichnungen näher beschrieben.

Dabei zeigen jeweils in schematischer Ansicht:
- FIG. 1: eine Sicherungsvorrichtung für einen Steuerstab in einer kerntechnischen Anlage, und
- FIG. 2: eine Sicherungsvorrichtung gemäß FIG. 1 in einem Reaktor einer kerntechnischen Anlage.

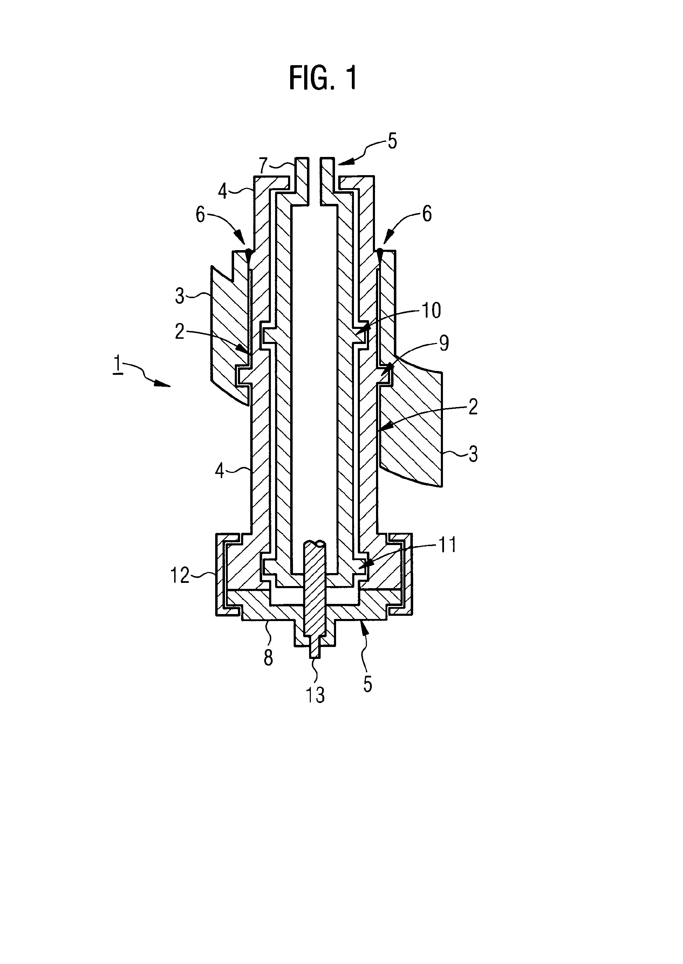

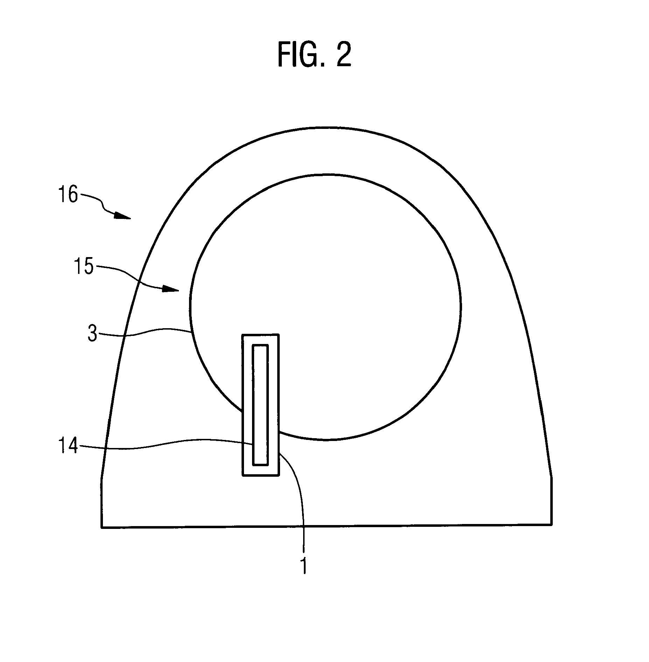

Einander entsprechende Teile in FIG. 1 und FIG. 2 sind mit den gleichen Bezugszeichen versehen.

FIG. 1 zeigt eine Sicherungsvorrichtung 1 für einen Steuerstab in einer kerntechnischen Anlage in einer schematischen Längsschnittsdarstellung. Die Sicherungsvorrichtung 1 umfasst ein durch eine Aussparung 2 einer Reaktordruckwand 3 eines Reaktordruckbehälters geführtes Antriebsgehäuse 4 eines Steuerstabantriebes 5, welches über eine Verbindungsnaht 6 mit der Reaktordruckwand 3 verbunden ist. Das Antriebsgehäuse 4 weist eine hohlzylindrische Form auf. Weiterhin umfasst der Steuerstabantrieb 5 ein hohlzylindrisch geformtes Bauteil 7, welches von dem Antriebsgehäuse 4 konzentrisch umschlossen ist, sowie ein separates Bauteil 8 im unteren Bereich des Steuerstabantriebes 5. Das Antriebsgehäuse 4 ist mit einem in Form einer Bajonettverbindung ausgebildeten, unterhalb der Verbindungsnaht 6 angeordneten Kupplungselement 9 mit der Reaktordruckwand 2 formschlüssig verbunden. In analoger Weise ist das hohlzylindrisch geformte Bauteil 7 des Steuerstabantriebes 5 mit einem oberen inneren Kupplungselement 10 und mit einem unteren inneren Kupplungselement 11 mit dem Antriebsgehäuse 4 formschlüssig verbunden. Das obere innere Kupplungselement 10 ist im Montagezustand unterhalb der Verbindungsnaht 6 und oberhalb des äußeren Kupplungselementes 9 angeordnet. Das untere innere Kupplungselement 11 ist unterhalb des äußeren Kupplungselementes 9 im unteren Endbereich des hohlzylindrisch geformten Bauteils 7 angeordnet. Das obere innere Kupplungselement 10 und das untere innere Kupplungselement 11 werden bevorzugt durch einen gemeinsamen Kupplungsvorgang gelöst bzw. verbunden.

Das separate Bauteil 7 ist mittels eines auch als Klemmzange bezeichneten Klemmelementes 12 im unteren Bereich des Antriebsgehäuses 4 mit dem Antriebsgehäuse 4 formschlüssig verbunden. Weiterhin sichtbar ist eine Antriebswelle 13 des Steuerstabantriebes 5.

FIG. 2 zeigt in schematischer Darstellung eine Sicherungsvorrichtung 1 gemäß FIG. 1 mit einem Steuerstab 14 in einem Reaktor 15 einer kerntechnischen Anlage 16. Der Reaktor 15 ist von der Reaktordruckwand 3 umschlossen.

### Bezugszeichenliste

- 1: Sicherungsvorrichtung
- 2: Aussparung
- 3: Reaktordruckwand
- 4: Antriebsgehäuse
- 5: Steuerstabantrieb
- 6: Verbindungsnaht
- 7: hohlzylindrisch geformtes Bauteil
- 8: separates Bauteil
- 9: Kupplungselement
- 10: oberes inneres Kupplungselement
- 11: unteres inneres Kupplungselement
- 12: Klemmelement
- 13: Antriebswelle
- 14: Steuerstab
- 15: Reaktor
- 16: kerntechnische Anlage

## Patentansprüche

1. Sicherungsvorrichtung (1) für einen Steuerstab (14) in einer kerntechnischen Anlage (16), mit einem Steuerstabantrieb (5) und mit einem den Steuerstabantrieb (5) einfassenden und zur Durchführung durch eine Reaktordruckwand (3) ausgebildeten Antriebsgehäuse (4), wobei das Antriebsgehäuse (4) zumindest ein Kupplungselement (9) zur Ausbildung einer kraftschlüssigen und/oder einer formschlüssigen Verbindung des Antriebsgehäuses (4) mit der Reaktordruckwand (3) aufweist,
**dadurch gekennzeichnet, dass**
das Antriebsgehäuse (4) eine im Wesentlichen hohlzylindrische Form aufweist, und das oder jedes Kupplungselement (9) in Form einer Bajonettverbindung ausgebildet ist.

2. Sicherungsvorrichtung (1) nach Anspruch 1,
**dadurch gekennzeichnet, dass**
der Steuerstabantrieb (5) zumindest ein inneres Kupplungselement (10,11) zur Ausbildung einer kraftschlüssigen und/oder einer formschlüssigen Verbindung des Steuerstabantriebs (5) mit dem Antriebsgehäuse (4) aufweist.

3. Sicherungsvorrichtung nach Anspruch 2,
**dadurch gekennzeichnet, dass**
der Steuerstabantrieb (5) ein hohlzylindrisch geformtes Bauteil (7) umfasst, und das innere Kupplungselement (10,11) oder eine Mehrzahl von inneren Kupplungselementen (10,11) in Form einer Bajonettverbindung ausgebildet ist.

4. Sicherungsvorrichtung nach Anspruch 3,
**dadurch gekennzeichnet, dass**
der Steuerstabantrieb (5) eine Mehrzahl von inneren Kupplungselementen (10,11) aufweist, wobei zumindest jeweils ein inneres Kupplungselement (10,11) in jeweils einem endseitigen Bereich bezüglich der Längsrichtung des Steuerstabantriebs (5) ausgebildet ist.

5. Sicherungsvorrichtung nach Anspruch 4,
**dadurch gekennzeichnet, dass**
die inneren Kupplungselemente (10,11) zur Ausbildung einer kraftschlüssigen und/oder einer formschlüssigen Verbindung des Steuerstabantriebs (5) mit dem Antriebsgehäuse (4) mechanisch gekoppelt sind.

6. Sicherungsvorrichtung nach einem der Ansprüche 1 bis 5,
**dadurch gekennzeichnet, dass**
der Steuerstabantrieb (5) ein separates Bauteil (8) umfasst, und ein Klemmelement (12) zur Ausbildung einer kraft- und formschlüssigen Verbindung des separaten Bauteils (8) mit dem Antriebsgehäuse (4) vorgesehen ist.

## Claims

1. Securing device (1) for a control rod (14) in a nuclear plant (16), comprising a control rod drive (5) and comprising a drive housing (4) which encloses the control rod drive (5) and is designed to be guided through a reactor pressure wall (3), the drive housing (4) having at least one coupling element (9) for forming a force-fit connection and/or an interlocking connection between the drive housing (4) and the reactor pressure wall (3),
**characterised in that**
the drive housing (4) has a substantially hollow cylindrical shape, and the or each coupling element (9) is designed in the form of a bayonet connection.

2. Securing device (1) according to claim 1,
**characterised in that**
the control rod drive (5) has at least one inner coupling element (10, 11) for forming a force-fit connection and/or an interlocking connection between the control rod drive (5) and the drive housing (4).

3. Securing device according to claim 2,
**characterised in that**
the control rod drive (5) comprises a hollow-cylindrically shaped component (7) and the inner coupling element (10, 11) or a plurality of inner coupling elements (10, 11) is designed in the form of a bayonet connection.

4. Securing device according to claim 3,
**characterised in that**
the control rod drive (5) has a plurality of inner coupling elements (10, 11), at least one inner coupling element (10, 11) in each case being formed in each end region with respect to the longitudinal direction of the control rod drive (5).

5. Securing device according to claim 4,
**characterised in that**
the inner coupling elements (10, 11) are mechanically coupled in order to form a force-fit connection and/or an interlocking connection between the control rod drive (5) and the drive housing (4).

6. Securing device according to any of claims 1 to 5,
**characterised in that**
the control rod drive (5) comprises a separate component (8) and a clamping element (12) is provided in order to form a force-fit and interlocking connection between the separate component (8) and the drive housing (4).

## Revendications

1. Dispositif de fixation (1) pour une barre de commande (14) dans une installation nucléaire (16), avec un entraînement de barre de commande (5) et avec un carter d'entraînement (4) contenant l'entraînement de barre de commande (5) et constitué pour la traversée d'une paroi de réacteur résistante à la pression (3), le carter d'entraînement (4) présentant au moins un élément d'accouplement (9) pour la constitution d'un raccordement, par liaison de force et/ou par liaison de forme, du carter d'entraînement (4) avec la paroi de réacteur résistante à la pression (3),
**caractérisé en ce que**
le carter d'entraînement (4) présente une forme essentiellement de cylindre creux, et l'élément d'accouplement (9) ou chaque élément d'accouplement est constitué sous la forme d'un raccordement à baïonnette.

2. Dispositif de fixation (1) selon la revendication 1,
**caractérisé en ce que**
l'entraînement de barre de commande (5) présente au moins un élément d'accouplement (10, 11) intérieur pour la constitution d'un raccordement, par liaison de force et/ou par liaison de forme, de l'entraînement de barre de commande (5) avec le carter d'entraînement (4).

3. Dispositif de fixation selon la revendication 2,
**caractérisé en ce que**
l'entraînement de barre de commande (5) comprend un composant (7) en forme de cylindre creux, et l'élément d'accouplement (10, 11) intérieur ou une pluralité d'éléments d'accouplement (10, 11) intérieurs est constitué(e) sous la forme d'un raccordement à baïonnette.

4. Dispositif de fixation selon la revendication 3,
**caractérisé en ce que**
l'entraînement de barre de commande (5) présente une pluralité d'éléments d'accouplement (10,11) intérieurs, dans lequel au moins respectivement un élément d'accouplement (10, 11) intérieur est constitué dans respectivement une zone côté extrémité par rapport à la direction longitudinale de l'entraînement de barre de commande (5).

5. Dispositif de fixation selon la revendication 4,
**caractérisé en ce que**
les éléments d'accouplement (10, 11) intérieurs sont couplés mécaniquement pour la constitution d'un raccordement, par liaison de force et/ou par liaison de forme, de l'entraînement de barre de commande (5) avec le carter d'entraînement (4).

6. Dispositif de fixation selon l'une des revendications 1 à 5,
**caractérisé en ce que**
l'entraînement de barre de commande (5) comprend un composant (8) séparé, et il est prévu un élément de serrage (12) pour la constitution d'un raccordement, par liaison de force et par liaison de forme, du composant (8) séparé avec le carter d'entraînement (4).
